# EUROPÄISCHE PATENTANMELDUNG

(11) **EP 1 365 185 A2**
(43) Veröffentlichungstag der Anmeldung: **26.11.2003**
(21) Anmeldenummer: 03008316.6
(22) Anmeldetag: 10.04.2003
(51) Int. Cl.: F16L 33/02, B25J 15/08, B25J 9/10, B25J 9/12, B23P 19/08

(54) **Schlauchschelle aus einem Federband, dessen Endabschnitte im aufgeweiteten Zustand verriegelbar sind, und Entriegelungsvorrichtung**

(30) Priorität: 23.05.2002 DE 10222732
(71) Anmelder: Rasmussen GmbH, 63477 Maintal (DE)
(72) Erfinder: Gyöngyösi, Jürgen, 63456 Hanau (DE)
(74) Vertreter: Knoblauch, Andreas, Dr.-Ing.

(57) **Zusammenfassung**

Eine Schelle zum Festklemmen eines Schlauches (1) auf einem Rohr oder dergleichen hat ein ringförmiges Federband (2), dessen Endabschnitte (3, 4) in einer aufgeweiteten Lage der Schelle miteinander formschlüssig verriegelbar sind. Die Verriegelung ist entriegelbar, damit sich das Federband (2) um den Schlauch (1) zusammenzieht. Bei einer bekannten Federbandschelle sind die Endabschnitte mit radialen Spannbacken versehen, und die Schelle ist nur bei einem vorbestimmten Aufweitungs-Durchmesser verriegelbar. Um die Spannbacken zu vermeiden und eine Verriegelung bei verschiedenen Aufweitungs-Durchmessern der Schelle zu ermöglichen, sind die Endabschnitte (3, 4) nebeneinander angeordnet und in ihren einander zugekehrten Rändern zur Herstellung der Verriegelung jeweils mit Zähnen (5, 6) versehen. Eine Vorrichtung (16) zum Entriegeln der Schelle ist magnetisch am einen Endabschnitt (4) anbringbar und enthält einen elektromagnetisch betätigbaren Schieber (20) sowie zwei Anwesenheitsfühler (21, 22). Letzterer greift am anderen Endabschnitt (3) an. Nur wenn beide Fühler (21, 22) die Anwesenheit eines Schlauches (1) in der Schelle feststellen, wird der Schieber (20) betätigt, wobei die Zähne außer Eingriff gelangen.

## Beschreibung

Die Erfindung bezieht sich auf eine Schelle zum Festklemmen eines Schlauches auf einem Rohr oder dergleichen, die ein ringförmig gebogenes Federband aufweist, dessen Endabschnitte in einer gegen die Federkraft des Federbandes über den Nenndurchmesser des Schlauches hinaus aufgeweiteten Lage der Schelle miteinander formschlüssig verriegelbar sind, wobei ihre Verriegelung entriegelbar ist, so daß sich das Federband fest um den Schlauch zusammenzieht. Ferner bezieht sich die Erfindung auf eine Vorrichtung zum Entriegeln der Schelle.

Eine solche Schelle wird auch "Federbandschelle" genannt und ist beispielsweise aus der US 5 414 905 oder der US 5 864 926 bekannt. Dort ist der eine Endabschnitt durch einen Schlitz im anderen Endabschnitt des Federbandes hindurchgeführt, wobei beide Endabschnitte mit radial vorstehenden Spannbacken versehen sind. Im verriegelten Zustand greift ein am einen Endabschnitt ausgebildeter Haken oder eine am einen Endabschnitt ausgebildete Lasche hinter der Spannbacke des anderen Endabschnitts an. Die Spannbacken ragen jedoch relativ weit über den Umfang der Schelle hinaus. Solche Spannbacken sind materialaufwendig, hinderlich und können zu Verletzungen führen. Bei kürzeren oder flacher gehaltenen Spannbacken, wie sie beispielsweise aus der US 4 425 681 oder US 5 203 809 bekannt sind, besteht die Gefahr einer selbsttätigen Entriegelung der aufgeweiteten Schelle, so daß sie mit hoher Geschwindigkeit wegfliegt und Personen verletzen kann, bevor sie auf den festzuklemmenden Schlauch geschoben ist.

Ferner sind Federbandschellen im Handel erhältlich, deren Endabschnitte seitlich nebeneinander liegen und keine radial abstehenden Spannbacken aufweisen. Sie sind jedoch nicht im aufgeweiteten Zustand verriegelbar.

In allen bekannten Fällen, bei denen die Federbandschellen im aufgeweiteten Zustand verriegelbar sind, ist die Verriegelung nur bei einem vorbestimmten Nenndurchmesser, auf den die Schellen aufgeweitet werden, möglich.

Der Erfindung liegt die Aufgabe zugrunde, eine Schelle der eingangs geschilderten Art anzugeben, die keine radial vorstehenden Spannbacken an den Endabschnitten aufweist und bei verschiedenen Aufweitungs-Durchmessern verriegelbar ist. Ferner soll eine Vorrichtung angegeben werden, die ein gefahrloses Entriegeln der aufgeweiteten, verriegelten Schelle ermöglicht.

Erfindungsgemäß ist bei der eingangs geschilderten Schelle zur Lösung der genannten Aufgabe vorgesehen, daß die Endabschnitte seitlich nebeneinander liegen und in ihren einander in Axialrichtung der Schelle zugekehrten Rändern zur Herstellung der formschlüssigen Verriegelung jeweils mit wenigstens einem seitlich vorstehenden Zahn versehen sind.

Bei dieser Lösung sind zur Verriegelung der aufgeweiteten Schelle keine Spannbacken erforderlich. Sie entfallen daher. Das Spannen kann vielmehr mittels eines einfachen Werkzeugs, z.B. einer Zange, erfolgen, die an den freien Enden des Federbandes angreift.

In der aufgeweiteten Lage des Federbandes kann dann dafür gesorgt sein, daß jeder Zahn des einen Randes mit jeweils einem Zahn des anderen Randes in Eingriff bringbar ist. Der Eingriff wird vorzugsweise dadurch erreicht, daß die Endabschnitte, während die Schelle mit dem Werkzeug in der aufgeweiteten Lage gehalten wird, axial so weit zueinander hin gebogen werden, und zwar ohne bleibende Verformung, bis die Zahnreihen bei dem gewünschten, durch das Werkzeug bestimmten Aufweitungs-Durchmesser des Federbandes in Eingriff gebracht sind. Dadurch ist es bei Ausbildung einer Reihe von Zähnen an jedem der beiden Ränder möglich, die Aufweitung des Federbandes an verschiedene Schlauchdurchmesser anzupassen, so daß ein und dieselbe Schelle für verschiedene Schlauchdurchmesser benutzt werden kann und nicht für jeden Schlauchdurchmesser eine andere, in der auf den jeweils erforderlichen Durchmesser aufgeweiteten Lage verriegelbare Schelle hergestellt und vorrätig gehalten werden muß.

Vorzugsweise sind die Zähne in Radialansicht der Schelle etwa dreieckförmig. Die Zahnreihen lassen sich dann leicht in Eingriff bringen.

Sodann können die Zähne zu dem jeweiligen freien Ende des Federbandes hin geneigt sein. Dies erhöht die Sicherheit des Zusammenhalts der miteinander in Eingriff stehenden Zähne, da sie sich hintergreifen können.

Zusätzlich können die Zähne in Radialrichtung der Schelle gebogen sein, so daß sie teilweise über den Ringumfang des Federbandes hinausragen. Die innerhalb der in Eingriff stehenden Zähne oder Zahnreihen verbleibenden Kanten und Ecken der Zähne können dann in die ihnen zugekehrte(n) Flanke(n) des Zahnes oder der Zähne des anderen Endabschnitts eingreifen. Dies erschwert ein radiales, unabsichtliches Auseinanderbiegen der Endabschnitte.

Alternativ zu der Dreieckform der Zähne ist es auch möglich, die Zähne in Radialansicht der Schelle rechteckig auszubilden. Die Zähne sind dann auch bei größeren Aufweitungs-Durchmessern, bei denen sie in Eingriff stehen, relativ hoch belastbar.

Alternativ ist es ferner möglich, daß die Zähne der Endabschnitte im aufgeweiteten Zustand der Schelle nicht miteinander in Eingriff gebracht werden, sondern daß die Endabschnitte in der aufgeweiteten Lage des Federbandes durch ein Verbindungsstück zusammengehalten sind, das drei parallele Schenkel aufweist, von denen der eine in sich gegenüberliegende Zahnlücken greift und die beiden anderen jeweils an einem der axial äußeren Ränder der Endabschnitte anliegen. Hierbei müssen die Endabschnitte zur Aufrechterhaltung des gegenseitigen Eingriffs der Zähne nicht zueinander hin gebogen werden.

Das Verbindungsstück kann dann einen Griff aufweisen, mittels dem es zur Entriegelung der aufgeweiteten Schelle mit dem Federband außer Eingriff gebracht werden kann.

Der Griff ist dabei vorzugsweise ringförmig, so daß er leicht erfaßt werden kann.

Die erfindungsgemäße Vorrichtung zum Entriegeln der aufgeweiteten Schelle, bei in Eingriff stehenden Zahnreihen, kann, vorzugsweise magnetisch, an dem einen Endabschnitt arretierbar sein und einen, vorzugsweise elektromagnetisch, betätigbaren Schieber sowie zwei Anwesenheitsfühler aufweisen, wobei der Schieber, wenn die Entriegelungsvorrichtung am einen Endabschnitt angebracht ist, am anderen Endabschnitt in Radialrichtung der Schelle verschiebbar angreift und der Erfassungsbereich der Anwesenheitsfühler neben den axial äußeren Rändern der Endabschnitte liegt und die Verschiebung des Schiebers, bei Feststellung der Anwesenheit eines Schlauches in der Schelle durch die beiden Anwesenheitsfühler, unter Mitnähme des anderen Endabschnitts des Federbandes um einen Betrag freigebbar ist, bei dessen Erreichen die Zähne der Endabschnitte radial außer Eingriff gelangen.

Grundsätzlich ist es zwar möglich, die Entriegelung mittels eines einfachen Schraubendrehers vorzunehmen, dessen Klinge zwischen die nicht in Eingriff stehenden Bereiche der Endabschnitte gebracht und dann gedreht wird. Die zuvor geschilderte Vorrichtung hat jedoch den Vorteil, daß sie das Entriegeln selbsttätig nur dann ermöglicht, wenn die Schelle im aufgeweiteten Zustand um einen Schlauch herum vormontiert ist. Solange die Schelle nicht um einen Schlauch herum angeordnet ist, sondern sich im aufgeweiteten und verriegelten Zustand außerhalb des Schlauches befindet und die Anwesenheitsfühler mithin keinen Gegenstand feststellen, um den herum die Schelle angeordnet ist, läßt sie sich nicht entriegeln. Sie kann dann nicht unabsichtlich geöffnet werden und durch die beim Zusammenschnappen bewirkte Reaktionskraft nicht weggestoßen werden und Personen verletzen.

Die Erfindung und ihre Weiterbildungen werden nachstehend anhand der beiliegenden Zeichnungen bevorzugter Ausführungsbeispiele beschrieben. Darin stellen dar:
- Fig. 1: einen Schlauch mit einer ihn umgebenden, erfindungsgemäßen Schelle im aufgeweiteten und verriegelten Zustand,
- Fig. 2: eine Radialansicht auf die Schelle nach Fig. 1,
- Fig. 3: eine Radialansicht der Schelle nach Fig. 1 im entriegelten und auf dem Schlauch festgeklemmten Zustand,
- Fig. 4: eine geringfügig abgewandelte Ausführungsform der Schelle nach den Fig. 1 bis 3, bei der die freien Enden geringfügig radial nach außen gebogen sind,
- Fig. 5: ein Beispiel einer Entriegelung einer im aufgeweiteten Zustand verriegelten erfindungsgemäßen Schelle mittels eines Schraubendrehers,
- Fig. 6: eine ähnliche Ansicht wie die nach Fig. 3, bei der die Schelle im entriegelten Zustand fest um einen Schlauch mit kleinem Durchmesser zusammengezogen ist,
- Fig. 7: eine Axialansicht der Anordnung nach Fig. 6,
- Fig. 8: eine Ansicht der erfindungsgemäßen Schelle in einem entriegelten Zustand, in dem sie fest am Umfang eines Schlauches mit größerem Durchmesser zusammengezogen ist,
- Fig. 9: eine Axialansicht der Anordnung nach Fig. 8,
- Fig. 10: das Spannen einer erfindungsgemäßen Schelle mittels eines speziellen Werkzeugs,
- Fig. 11: eine erfindungsgemäße Schelle im verriegelten Zustand und eine daran angebrachte erfindungsgemäße Vorrichtung zum Entriegeln der Schelle,
- Fig. 12: eine Abwandlung der erfindungsgemäßen Schelle mit rechteckigen Zähnen, wobei die Endabschnitte in der aufgeweiteten Lage des Federbandes durch ein Verbindungsstück zusammengehalten werden,
- Fig. 13: das Entriegeln der Schelle nach Fig. 12 durch radiales Abziehen des Verbindungsstücks,
- Fig. 14: eine weitere Abwandlung einer erfindungsgemäßen Schelle nach den Fig. 1 bis 3 in Form eines Ausschnitts der Schelle in perspektivischer Darstellung,
- Fig. 15: einen Querschnitt durch den Ausschnitt der Schelle nach Fig. 14 und
- Fig. 16: eine Draufsicht auf den Ausschnitt der Schelle nach Fig. 14.

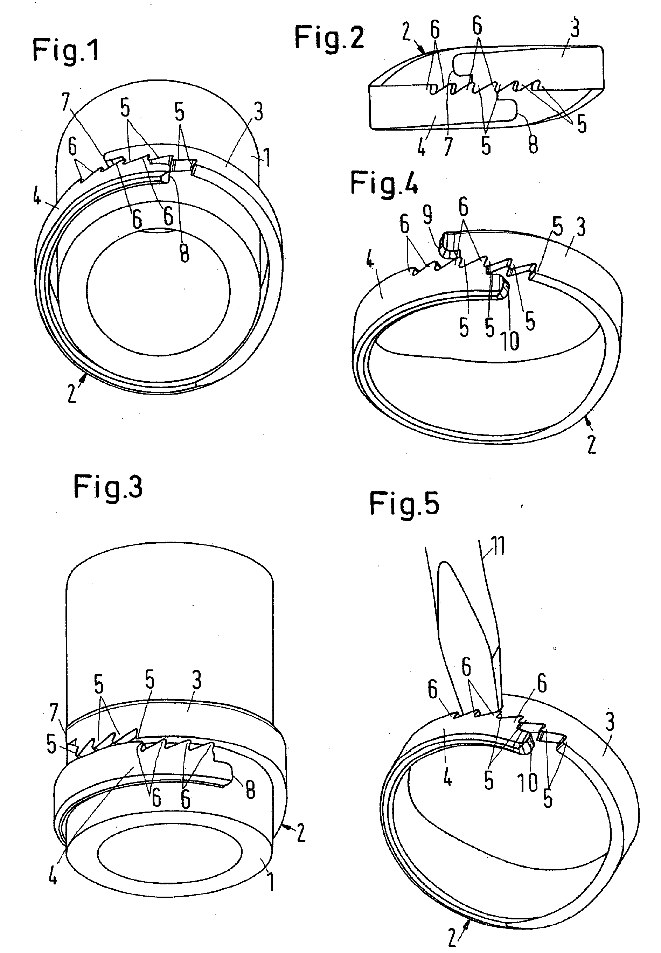

Die Schelle nach den Fig. 1 bis 3 dient zum Festklemmen eines Schlauches 1 auf einem (nicht dargestellten) Rohr oder dergleichen. Sie besteht aus einem ringförmig gebogenen Federband 2, dessen Endabschnitte 3 und 4 in einer gegen die Federkraft des Federbandes 2 über den Nenndurchmesser des Schlauches hinaus aufgeweiteten Lage der Schelle nach Fig. 1 miteinander formschlüssig verriegelbar sind. Die Verriegelung ist entriegelbar, so daß sich das Federband 2 fest um den Schlauch 1 zusammenzieht. Die Endabschnitte 3 und 4 liegen seitlich nebeneinander und sind in ihren einander in Axialrichtung der Schelle zugekehrten Rändern zur Herstellung der formschlüssigen Verriegelung jeweils mit einer Reihe seitlich vorstehender Zähne 5 und 6 versehen. Im dargestellten Beispiel hat jede Reihe vier Zähne 5 bzw. 6.

In der aufgeweiteten Lage des Federbandes 2 nach Fig. 1 und Fig. 2 stehen zwei Zähne 5 der einen Reihe mit zwei Zähnen 6 der anderen Reihe in Eingriff. In der Radialansicht der Schelle sind die Zähne 5, 6 dreieckförmig. Ferner sind sie zu den freien Enden 7 und 8 ihres jeweiligen Endabschnitts 3 bzw. 4 hin geneigt.

In den Fig. 4 und 5 ist ein gegenüber dem Ausführungsbeispiel nach den Fig. 1 bis 3 abgewandeltes Ausführungsbeispiel einer erfindungsgemäßen Schelle dargestellt, bei der die freien Enden 9 und 10 der Endabschnitte 3 und 4 leicht radial nach außen gebogen sind, damit sie etwas leichter auf dem Schlauch gleiten können, wenn sich die Schelle nach der Verriegelung aus einer aufgeweiteten Lage, wie sie beispielsweise in den Fig. 1, 2, 4 und 5 dargestellt ist, aufgrund ihrer Federvorspannung, die sie in der aufgeweiteten Lage aufweist, fest um den Schlauch zusammenzieht, wie es beispielsweise in Fig. 3 dargestellt ist.

Die Entriegelung kann beispielsweise mittels eines Schraubendrehers 11 erfolgen, dessen Klinge gemäß Fig. 5 zwischen den Endabschnitten 3 und 4 neben einem Randbereich, in dem der eine oder andere Endabschnitt 3, 4 keinen Zahn aufweist und daher etwas schmaler ist, eingeführt und gedreht wird.

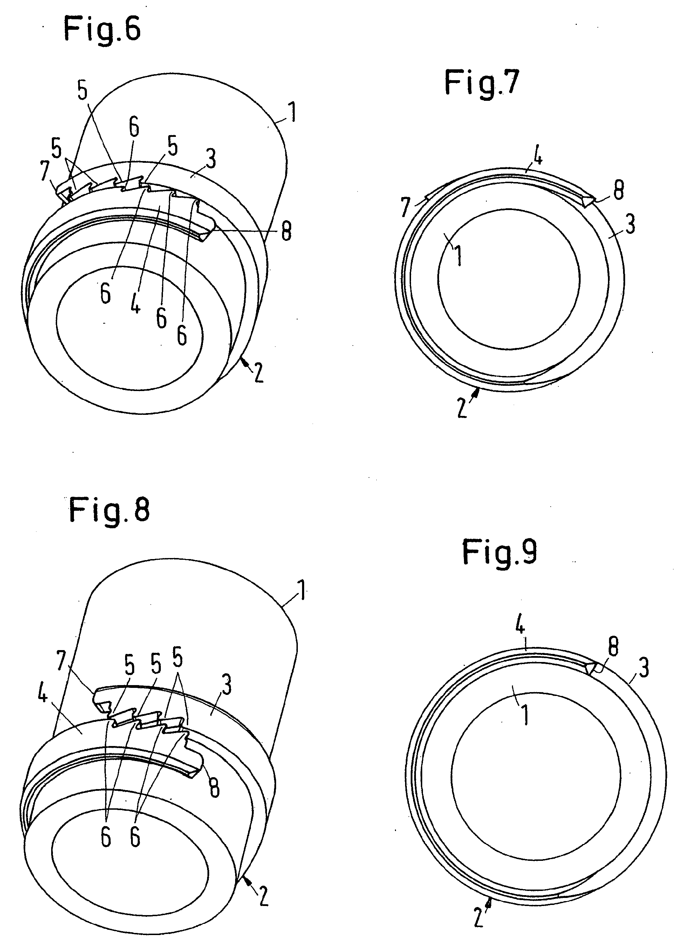

Die Fig. 6 und 7 veranschaulichen die Lage eines Federbandes 2, das beispielsweise auf einen Schlauchdurchmesserbereich von 25 bis 27 mm ausgelegt ist, wenn der Schlauch 1 den kleinsten Durchmesser von 25 mm des Nenndurchmesserbereichs der Schelle aufweist. Dabei liegt das Federband 2, bis auf seine Enden 7 und 8, die geringfügig radial nach außen vorstehen, kreisförmig am Umfang des Schlauches 1 an.

Die Fig. 8 und 9 veranschaulichen die Lage desselben Federbandes 2, das für einen Schlauchdurchmesserbereich von 25 bis 27 mm ausgelegt ist, bei dem größten Durchmesser des Schlauches 1 von 27 mm im entriegelten Zustand, in dem das Federband 2 fest am Umfang des Schlauches 1 anliegt. Hierbei liegen die Enden 7 und 8 des Federbandes 2 ebenfalls am Umfang des Schlauches 1 an.

Bei einer Zwischengröße des Schlauches 1 von 26 mm ergibt sich dann eine entsprechende Zwischenlage zwischen den in den Fig. 6 und 7 einerseits und den Fig. 8 und 9 andererseits dargestellten Lagen.

Die Schelle kann mithin in unterschiedlichen Öffnungsweiten, entsprechend dem jeweiligen Durchmesser des Schlauches 1, verriegelt, auf den Schlauch 1 geschoben und dann entriegelt werden, so daß sich das Federband 2 fest um den Schlauch 1 zusammenzieht und diesen auf dem betreffenden Rohr oder dergleichen festklemmt.

Es ist allerdings auch möglich, die Schelle wie bekannte Schellen, die nicht im aufgeweiteten Zustand verriegelt werden können, anzuwenden, d.h. die Zähne 5 und 6 in der aufgeweiteten Lage nicht miteinander in Eingriff zu bringen.

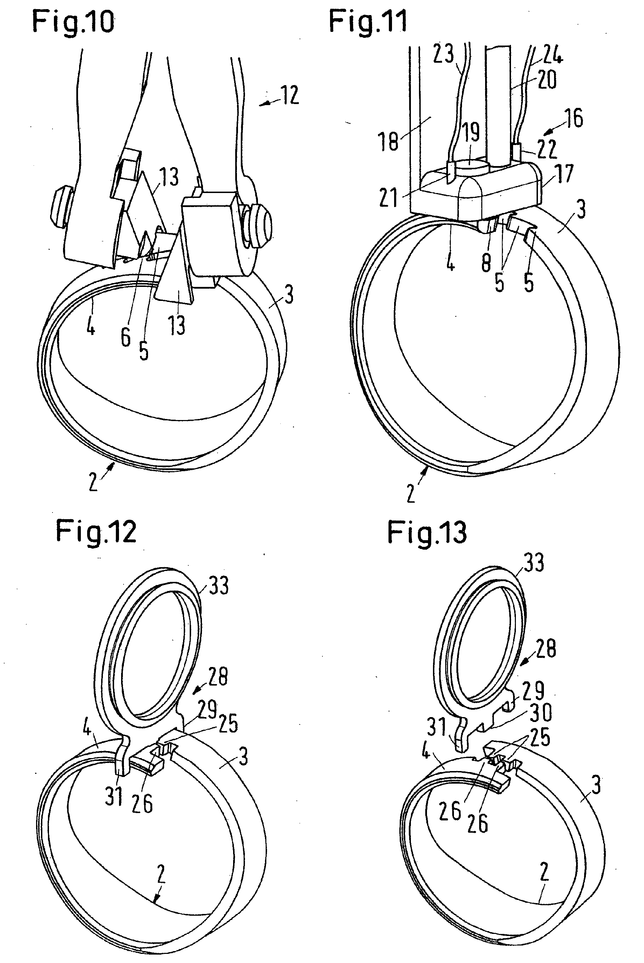

Das Aufweiten des Federbandes 2 kann mittels einer herkömmlichen Zange oder gemäß Fig. 10 mit einer speziellen Zange 12 erfolgen. Die Zange 12 hat Spannbacken 13, in denen die an die Enden 7 und 8 bzw. 9 und 10 angrenzenden, zahnfreien Bandbereiche der Endabschnitte 3, 4 des Federbandes 2 aufgenommen und beim Schließen der Zange 12 bis zum Erreichen des maximal gewünschten Durchmessers des Federbandes 2 in Umfangsrichtung des Federbandes 2 mitgenommen werden. Wenn ein oder mehrere Zähne der einen Zahnreihe einer oder mehreren Zahnlükken der anderen Zahnreihe in der aufgeweiteten Lage gegenüberstehen, werden die Endabschnitte 3 axial zueinander hingebogen, so daß die Zähne der beiden Zahnreihen ineinander greifen und nach Wegnahme der Zange 12 aufgrund der in Schließrichtung gerichteten Federkraft des Federbandes und der Hinterschneidungen der Zähne 5 und 6 einander hintergreifen, so daß sie die beispielsweise in den Fig. 1, 2, 4 und 5 dargestellte Verriegelungslage beibehalten.

Vorzugsweise sind die zahnfreien Bandbereiche beim Aufweiten der Schelle zwar jeweils in einer Nut der betreffenden Spannbacke 13 aufgenommen, doch hat die axial innere Wand der jeweiligen Nut einen Abstand von den Zähnen 6 bzw. 5 des gegenüberliegenden Endabschnitts 4 bzw. 3, so daß die Zähne 5 und 6 aufgrund eines entsprechenden Spiels der Zangenschenkel unter Verbiegung der Endabschnitte in Eingriff gebracht werden können.

Die Spannbacken 13 begrenzen den Aufweitungs-Durchmesser, indem sie beim Aufweiten der Schelle mit Anschlagflächen neben der jeweils inneren Nutenwand aneinander anschlagen. Ferner sind die Spannbacken 13 gegen Spannbacken auswechselbar, deren Anschlagflächen in Umfangsrichtung weiter zurück- oder vorversetzt sind, um einen entsprechend größeren oder kleineren Aufweitungs-Durchmesser zu erzielen, so daß andere Zähne 5 und 6 miteinander in Eingriff bringbar sind. Zu diesem Zweck sind die Spannbacken 13 zum einen unverdrehbar in Fassungen und zum anderen mittels Zapfen in Öffnungen der Zangenschenkel mittels nicht dargestellter Sicherungsringe, die in Ringnuten der Zapfen eingreifen, lösbar befestigt. Alternativ können die Zapfen der Spannbacken 13 auch im Schnappsitz in den Öffnungen der Zangenschenkel lösbar eingesetzt sein.

Die Entriegelung kann dann, wie schon erwähnt, mittels eines Schraubendrehers 11 gemäß Fig. 5 oder weitgehend selbsttätig mittels der in Fig. 11 dargestellten Vorrichtung 16 erfolgen.

Wie Fig. 11 zeigt, hat die Vorrichtung 16 ein Gehäuse 17 mit einem daran befestigten Halter 18. In dem Gehäuse 17 ist ein Magnet 19, vorzugsweise ein Dauermagnet, befestigt, dessen einer Pol oben aus dem Gehäuse 17 herausragt und der so weit durch das Gehäuse 17 hindurchgeführt ist, daß sein anderer Pol mit der Unterseite des Gehäuses 17 bündig abschließt. Seitlich neben dem Magneten 19 ist ein stabförmiger Schieber 20 durch das Gehäuse 17 hindurch verschiebbar gelagert. Der Schieber 20 bildet den Anker eines Elektromagneten, dessen Spule nicht dargestellt ist. Die Vorrichtung 16 wird radial außen auf die Endabschnitte 3 und 4 aufgesetzt, so daß der Magnet 19 die Vorrichtung 16 an dem einen Endabschnitt 4 festhält und das eine Ende des Schiebers 20 nur auf dem Endabschnitt 3 aufsitzt. Axial in Bezug auf das Federband 2 außerhalb des Magneten 19 einerseits und des Schiebers 20 andererseits ist jeweils ein Anwesenheitsfühler 21 und 22 in dem Gehäuse 17 befestigt, so daß die Erfassungsbereiche der Anwesenheitsfühler neben den axial äußeren Rändern der Endabschnitte 3, 4 des Federbandes 2 liegen. Die Anwesenheitsfühler 21 und 22 ragen ebenfalls durch das Gehäuse 17 hindurch, so daß sie axial außerhalb der Endabschnitte 3 und 4 enden, und haben jeweils einen Sender-Empfänger für Licht-, Schall- oder elektromagnetische Wellen. Sie wirken daher als Reflektionsfühler. Der Sender jedes Fühlers 21, 22 ist über ein Kabel 23 bzw. 24 mit einer nicht dargestellten Stromquelle und der Empfänger jedes Fühlers 21, 22 über das gleiche Kabel 23, 24 mit einem UND-Glied in einer Schaltungsanordnung verbunden, die ebenfalls nicht dargestellt und am Halter 18 angebracht ist. Die Stromquelle ist ferner mit der in der Schaltungsanordnung angeordneten Spule des den Schieber 20 betätigenden Elektromagneten über ein Schaltelement verbunden, das bei Erhalt eines Empfangssignals durch beide Fühler 21 und 22 die Stromzufuhr zu der Spule einschaltet.

Die Anwesenheitsfühler 21 und 22 erzeugen jedoch nur dann ein Empfangssignal, wenn ein von ihnen ausgesandtes Signal an einem in dem Federband 2 angeordneten Schlauch reflektiert wird, also ein Schlauch anwesend ist. Gegebenenfalls wird der Schieber 20 radial gegen den Endabschnitt 3 gedrückt, so daß der Endabschnitt 3 so weit radial nach innen gedrückt wird, bis die Zähne 5, 6 außer Eingriff gelangen, die Endabschnitte 3, 4 axial auseinander federn und sich das Federband 2 fest um den Schlauch zusammenzieht.

Alternativ kann der Schieber 20 mit dem Endabschnitt 3 lösbar verbunden sein, z.B. dadurch, daß er unter einen seitlichen Vorsprung am Endabschnitt 3 eingehakt wird. Der Endabschnitt 3 könnte dann durch den Elektromagneten radial nach außen gezogen werden, um ihn zu entriegeln.

Eine weitere Abwandlung kann darin bestehen, daß die Entriegelungsvorrichtung nicht magnetisch, sondern mechanisch an dem einen Endabschnitt 4 lösbar arretierbar ist. Noch eine weitere Abwandlung kann darin bestehen, daß der Schieber 20 durch den Elektromagneten lediglich verriegelbar und entriegelbar und in der entriegelten Stellung manuell verschiebbar ist.

Die Entriegelungsvorrichtung 16 stellt mithin sicher, daß die Entriegelung der mit den Zähnen in Eingriff stehenden aufgeweiteten Schelle nur dann erfolgen kann, wenn sich ein Schlauch in der Schelle befindet. Die Schelle kann daher nicht versehentlich entriegelt werden, bevor sie auf den Schlauch geschoben worden ist. Dadurch ist sichergestellt, daß die Schelle nicht aufgrund einer versehentlichen Entriegelung ungehindert durch den beim Entspannen des Federbandes 2 entstehenden Impuls mit hoher Geschwindigkeit sozusagen "abgeschossen" wird und dabei unter Umständen Personen verletzt.

Die Fig. 12 und 13 stellen eine weitere Abwandlung der erfindungsgemäßen Federbandschelle dar. Hierbei sind die Endabschnitte 3 und 4 anstelle der dreieckförmigen Zähne mit rechteckförmigen Zähnen 25 und 26 versehen, die nicht miteinander in Eingriff gebracht werden. Vielmehr werden die Endabschnitte 3, 4 in der aufgeweiteten Lage des Federbandes 2 durch ein Verbindungsstück 28 zusammengehalten, das drei parallele Schenkel 29, 30, 31 in einer Ebene aufweist, von denen der mittlere Schenkel 30 in sich gegenüberliegende Zahnlücken zwischen den Zähnen 25 und 26 ragt und die beiden anderen Zähne 29 und 31 jeweils an einem der axial äußeren Ränder der Endabschnitte 3, 4 anliegen. Das Aufweiten kann auch bei diesem Ausführungsbeispiel mittels der Zange 12 nach Fig. 10 erfolgen. Zur Entriegelung kann das Verbindungsstück 28 mit den Zahnlücken zwischen den Zähnen 25, 26 außer Eingriff gebracht werden, wie es in Fig. 13 dargestellt ist. Um das Herausziehen des Verbindungsstücks 28 aus den Zahnlücken zu erleichtern, ist es mit einem ringförmigen Griff 33 versehen.

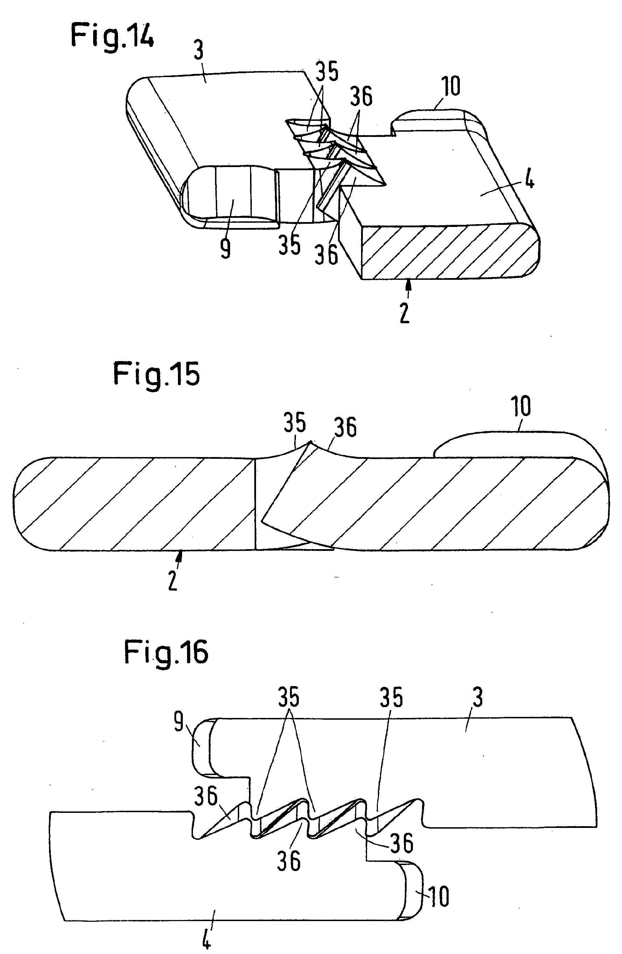

Die Fig. 14, 15 und 16 stellen eine weitere Abwandlung der mit den dreieckförmigen Zähnen 5, 6 versehenen Schelle dar. Bei diesem Ausführungsbeispiel sind die Zähne 5, 6 in Radialrichtung der Schelle gebogen, so daß sie teilweise über den Umfang des Federbandes 2 hinausragen. Dadurch können die radial inneren Kanten der Zähne 5, 6 sich unter der Kraft des Federbandes in die Flanken der benachbarten Zähne eindrücken, so daß sie sich noch schwieriger auf unabsichtliche Weise in Axialrichtung der Schelle entriegeln lassen.

Auch bei den Ausführungsbeispielen nach den Fig. 1 bis 3 und 6 bis 11 können die Zähne ebenso wie die Zähne 35, 36 bei dem Ausführungsbeispiel nach den Fig. 14 bis 16 gebogen sein.

Sodann ist es möglich, an jedem Endabschnitt 3, 4 statt mehrerer Zähne nur einen Zahn 5, 6 vorzusehen, wenn die Schelle grundsätzlich nur auf einen maximal zulässigen Durchmesser aufgeweitet werden soll.

## Patentansprüche

1. Schelle zum Festklemmen eines Schlauches (1) auf einem Rohr oder dergleichen, die ein ringförmig gebogenes Federband (2) aufweist, dessen Endabschnitte (3, 4) in einer gegen die Federkraft des Federbandes (2) über den Nenndurchmesser des Schlauches (1) hinaus aufgeweiteten Lage der Schelle miteinander formschlüssig verriegelbar sind, wobei ihre Verriegelung entriegelbar ist, so daß sich das Federband (2) fest um den Schlauch (1) zusammenzieht, **dadurch gekennzeichnet, daß** die Endabschnitte (3, 4) seitlich nebeneinander liegen und in ihren einander in Axialrichtung der Schelle zugekehrten Rändern zur Herstellung der formschlüssigen Verriegelung jeweils mit wenigstens einem seitlich vorstehenden Zahn (5, 6; 25, 26; 35, 36) versehen sind.

2. Schelle nach Anspruch 1, **dadurch gekennzeichnet, daß** jeder Zahn (5; 25; 35) des einen Randes in der aufgeweiteten Lage des Federbandes (2) mit jeweils einem Zahn (6; 26; 36) des anderen Randes in Eingriff bringbar ist.

3. Schelle nach Anspruch 1 oder 2, **dadurch gekennzeichnet, daß** die Zähne (5, 6; 35, 36) in Radialansicht der Schelle etwa dreieckförmig sind.

4. Schelle nach Anspruch 3, **dadurch gekennzeichnet, daß** die Zähne (5, 6; 35, 36) zu dem jeweiligen freien Ende (7, 8; 9, 10) des Federbandes (2) hin geneigt sind.

5. Schelle nach Anspruch 2 oder 3, **dadurch gekennzeichnet, daß** die Zähne (35, 36) in Radialrichtung der Schelle gebogen sind, so daß sie teilweise über den Ringumfang des Federbandes (2) hinausragen.

6. Schelle nach Anspruch 1, **dadurch gekennzeichnet, daß** die Zähne (25, 26) in Radialansicht der Schelle rechteckförmig sind.

7. Schelle nach einem der vorstehenden Ansprüche, ausgenommen Anspruch 2, **dadurch gekennzeichnet, daß** die Endabschnitte (3, 4) in der aufgeweiteten Lage des Federbandes (2) durch ein Verbindungsstück (28) zusammengehalten sind, das drei parallele Schenkel (29-31) aufweist, von denen der eine (30) in sich gegenüberliegende Zahnlücken ragt und die beiden änderen (29, 31) jeweils an einem der axial äußeren Ränder der Endabschnitte (3, 4) anliegen.

8. Schelle nach Anspruch 7, **dadurch gekennzeichnet, daß** das Verbindungsstück (28) einen Griff (33) aufweist.

9. Schelle nach Anspruch 8, **dadurch gekennzeichnet, daß** der Griff (33) ringförmig ist.

10. Vorrichtung (16) zum Entriegeln der aufgeweiteten Schelle nach einem der Ansprüche 2 bis 5, **dadurch gekennzeichnet, daß** die Vorrichtung (16) an dem einen Endabschnitt (4) arretierbar ist und einen Schieber (20) sowie zwei Anwesenheitsfühler (21, 22) aufweist, daß der Schieber (20) bei am einen Endabschnitt (4) arretierter Entriegelungsvorrichtung (16) am anderen Endabschnitt (3) in Radialrichtung der Schelle verschiebbar angreift und der Erfassungsbereich der Anwesenheitsfühler (21, 22) neben den axial äußeren Rändern der Endabschnitte (3, 4) liegt und daß die Verschiebung des Schiebers (20), bei Feststellung der Anwesenheit eines Schlauches (1) in der Schelle durch beide Anwesenheitsfühler (21, 22), unter Mitnahme des anderen Endabschnitts (3) des Federbandes (2) um einen Betrag freigebbar ist, bei dessen Erreichen die Zähne (5, 6; 35, 36) der Endabschnitte (3, 4) radial außer Eingriff gelangen.

11. Vorrichtung nach Anspruch 10, **dadurch gekennzeichnet, daß** sie magnetisch an dem einen Endabschnitt (16) arretierbar ist.

12. Vorrichtung nach Anspruch 10 oder 11, **dadurch gekennzeichnet, daß** der Schieber (20) elektromagnetisch betätigbar ist.
